# EUROPÄISCHE PATENTSCHRIFT

(11) **EP 1 760 331 B1**
(45) Veröffentlichungstag und Bekanntmachung des Hinweises auf die Patenterteilung: **10.04.2013**
(21) Anmeldenummer: 06118674.8
(22) Anmeldetag: 09.08.2006
(51) Int. Cl.: F16B 13/00

(54) **Befestigungselement für harte Untergründe**
Fastening part for hard substrates
Élément de fixation pour des sous-sol durs

(30) Priorität: 02.09.2005 DE 102005000110
(43) Veröffentlichungstag der Anmeldung: 07.03.2007
(73) Patentinhaber: HILTI Aktiengesellschaft, 9494 Schaan (LI)
(72) Erfinder: Allaart, Jan, 9493, Mauren (LI); Glogger, Josef, 86807, Buchloe (DE); Huber, Franz-Xaver, 82294, Günzlhofen (DE); Wieser, Jürgen, 86916, Kaufering (DE)
(74) Vertreter: Wildi, Roland

(56) Entgegenhaltungen:
- EP-A2- 1 536 149
- DE-B- 1 255 395
- US-A- 3 049 358
- US-A- 5 630 688

## Beschreibung

### Technisches Gebiet

Die Erfindung betrifft ein Befestigungselement für harte Untergründe, wie Beton, Mauerwerk und dergleichen, der im Oberbegriff des Patentanspruchs 1 genannten Art.

### Stand der Technik

Ein derartiges Befestigungselement dient der Befestigung in harten Untergründen, wie Beton, Mauerwerk und dergleichen. Das Befestigungselement wird in ein zuvor erstelltes Bohrloch in den Untergrund mittels eines geeigneten Setzwerkzeugs eingeschraubt, wobei das selbstschneidende Gewinde ein komplementäres Gewinde in dem Untergrund beziehungsweise in der Bohrlochwandung erstellt. Das Befestigungselement ist über den erzeugten Hinterschnitt im Untergrund verankert. Das in der Aufnahme vorgesehene Lastangriffsmittel ist beispielsweise ein Innengewinde, in welches zur Erstellung der Befestigung ein Befestigungsmittel, wie eine Gewindestange oder eine Schraube eindrehbar ist. Anstelle eines Innengewindes kann als Lastangriffsmittel auch ein Bajonettverschluss vorgesehen sein.

Aus der EP 1 536 149 A2 ist ein gattungsgemässes Befestigungselement bekannt, das einen zylinderförmigen Grundkörper umfasst, der ein erstes, in Setzrichtung des Befestigungselementes liegendes Ende mit einem Bodenabschnitt sowie ein zweites, dem ersten Ende abgewandtes Ende aufweist. An der Aussenseite des Grundkörpers ist ein selbstschneidendes Gewinde vorgesehen. Der Grundkörper weist ein innenliegendes Angriffsmittel für ein Setzwerkzeug sowie eine zum zweiten Ende offene Aufnahme auf, die sich in Richtung des zweiten Endes an das Angriffsmittel anschliesst und mit einem Innengewinde als Lastangriffsmittel versehen ist. Das Angriffsmittel ist in einem Endbereich des ersten Endes auf gleicher axialer Höhe des Grundkörpers wie der Auslauf des selbstschneidenden Gewindes angeordnet.

Nachteilig an der bekannten Lösung ist, dass die Ausbildung des innenliegenden Angriffsmittels an dem Boden der Aufnahme mit einem erheblichen Fertigungsaufwand verbunden und somit kostenintensiv ist. Zudem sind die Fertigungsmöglichkeiten bei einem solchen Befestigungselement stark eingeschränkt. Gerade bei einem Massenprodukt, wie ein solches Befestigungselement darstellt, ist eine wirtschaftliche Fertigung ein wesentlicher Wettbewerbsvorteil.

Aus der US 5,630,688 A ist eine gattungsfremde, selbstbohrende Durchführungshülse für abgehängte Gipsdecken zum Durchführen abgehängter Lampenaufhängungen bekannt, die einen zylindrischen Grundkörper aufweist, der ein erstes, in Setzrichtung des Befestigungselementes liegendes Ende sowie ein zweites, dem ersten Ende abgewandtes Ende aufweist. An dessen Aussenseite ist ein Gewinde vorgesehen. An dem ersten Ende sind zwei Schneidelemente ausgebildet, die beim Setzen der Durchführungshülse eine Öffnung für die Durchführungshülse in der Gipsdecke erstellen. Zwischen dem ersten und dem zweiten Ende des Grundkörpers ist ein innenliegendes Angriffsmittel für ein Setzwerkzeug vorgesehen, das gleichzeitig als Durchführöffnung dient. Weiter weist der Grundkörper eine zum zweiten Ende offene Aufnahme auf, die sich in Richtung des ersten Endes an das Angriffsmittel anschliesst.

Nachteilig an der bekannten Lösung ist, dass in harten Untergründen, wie Beton, Mauerwerk und dergleichen, keine selbstbohrenden Durchführhülsen verwendet werden können. Würde eine derartige Durchführhülse mit einem selbstschneidenden Gewinde für harte Untergründe versehen, so wären die Schneiden am ersten Ende nutzlos.

### Darstellung der Erfindung

Aufgabe der Erfindung ist es, ein Befestigungselement für harte Untergründe zu schaffen, dass einfach und somit wirtschaftlich zu fertigen ist.

Die Aufgabe ist durch die Merkmale des unabhängigen Anspruchs gelöst. Vorteilhafte Weiterbildungen sind in den Unteransprüchen dargelegt.

Gemäss der Erfindung ist das Angriffsmittel als durchgängige Öffnung im Bodenabschnitt ausgebildet und zwischen dem Lastangriffsmittel und dem Bodenabschnitt ist ein Übergangsbereich zur Führung eines Setzwerkzeugs vorgesehen.

Das Angriffsmittel für das Setzwerkzeug kann zu jedem Zeitpunkt während der Fertigung des erfindungsgemässen Befestigungselementes erstellt werden. Dabei kann das Angriffsmittel vom ersten Ende oder vom zweiten Ende des Grundkörpers ausgebildet werden. Somit können vielfältige, einfache und wirtschaftliche Fertigungsverfahren zur Herstellung des erfindungsgemässen Befestigungselementes eingesetzt werden. Zudem ist der Raum des Bohrlochs vor dem Befestigungselement nach dem Setzen des Befestigungselementes von aussen durch das Angriffsmittel weiterhin zugänglich und kann z. B. mit einem Mörtel verfüllt werden.

Die Aufnahme beziehungsweise das Lastangriffsmittel erstrecken sich vorteilhaft vom zweiten Ende des Grundkörpers bis zum Angriffsmittel, so dass der gesamte Abschnitt zur Übertragung von Lasten über das Befestigungsmittel zur Verfügung steht. In einer Variante erstreckt sich das Lastangriffsmittel für das Befestigungsmittel in der Aufnahme in einem Abstand zu dem Angriffsmittel und/oder zu dem zweiten Ende.

Vorzugsweise entspricht der maximale Durchmesser der durchgängigen Öffnung 50% bis 80% des Kerndurchmessers des Grundkörpers, womit eine stabile Ausgestaltung des Angriffsmittels für das Setzwerkzeug gegeben ist, um auch hohe Drehmomente zum Eindrehen des erfindungsgemässen Befestigungselementes in den harten Untergrund einbringen zu können. Unter Kerndurchmesser des Grundkörpers wird in diesem Zusammenhang der Aussendurchmesser des zylinderförmigen Grundkörpers ohne das selbstschneidende Gewinde bzw. der Durchmesser am Gewindegrund gemessen verstanden.

Erfindungsgemäss ist zwischen dem Lastangriffsmittel und dem Bodenabschnitt ein Übergangsbereich zur Führung eines Setzwerkzeugs vorgesehen. Der Übergangsbereich ist vorteilhaft derart gestaltet, dass beim Einführen des Setzwerkzeugs dieses für den Eingriff mit dem Angriffsmittel abgelenkt wird. Beispielsweise ist der Übergangsbereich kalotten- oder schalenförmig ausgebildet. Alternativ weist der Übergangsbereich z. B. eine trichterförmige Ausgestaltung auf. Aufgrund des Übergangsbereichs wird zudem eine grössere Angriffsfläche für das Setzwerkzeug beim Eingriff in das Angriffsmittel geschaffen, was die Einleitung höherer Drehmomente als bei einem Befestigungselement ohne einen Übergangsbereich ermöglicht.

Vorzugsweise weist das erste Ende des Grundkörpers eine kegelförmige Ausgestaltung auf, die ein einfaches Einführen des erfindungsgemässen Befestigungselementes in das zuvor erstellte Bohrloch und eine Zentrierung des Befestigungselementes in dem Bohrloch ermöglicht. Zudem schafft die kegelförmige Ausgestaltung eine grössere Angriffsfläche für das Setzwerkzeug beim Eingriff in das Angriffsmittel, was die Einleitung hoher Drehmomente ermöglicht.

In einer vorteilhaften Variante weist das erfindungsgemässe Befestigungselement zwischen dem Lastangriffsmittel und dem Bodenabschnitt einen Übergangsbereich sowie ein erstes Ende des Grundkörpers mit einer kegelförmigen Ausgestaltung auf.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand dreier Ausführungsbeispiele näher erläutert. Es zeigen:
- Fig. 1: Einen Längsschnitt durch ein erstes Ausführungsbeispiel des erfindungsgemässen Befestigungselementes im gesetzten Zustand;
- Fig. 2: einen Längsschnitt durch ein zweites Ausführungsbeispiel des erfindungsgemässen Befestigungselementes;
- Fig. 3: eine Ansicht auf das Befestigungselement gemäss den Pfeilen III-III in der Fig. 2; und
- Fig. 4: einen Längsschnitt durch ein drittes Ausführungsbeispiel des erfindungsgemässen Befestigungselementes.

Grundsätzlich sind in den Figuren gleiche Teile mit den gleichen Bezugszeichen versehen.

### Wege zur Ausführung der Erfindung

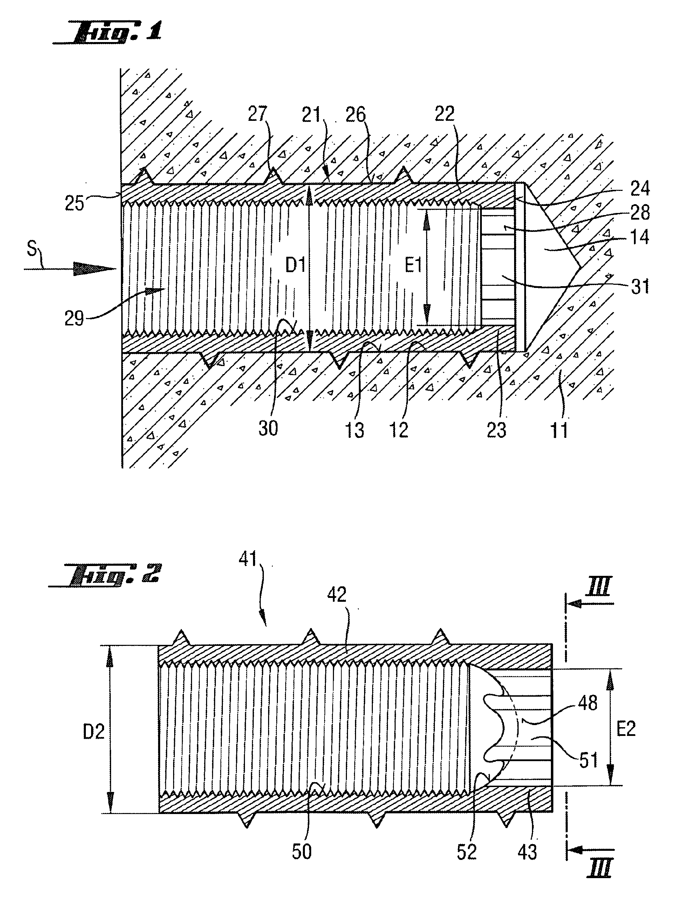

Das in der Figur 1 dargestellte erste Ausführungsbeispiel des Befestigungselementes 21 für harte Untergründe 11 weist einen zylinderförmigen Grundkörper 22 auf, an dessen Aussenseite 26 ein selbstschneidendes Gewinde 27 vorgesehen ist. Der Grundkörper 22 weist ein erstes, in Setzrichtung S liegendes Ende 24 mit einem Bodenabschnitt 23 sowie ein zweites, dem ersten Ende 24 abgewandtes Ende 25 auf. Der Grundkörper 22 weist zudem ein innenliegendes Angriffsmittel 28 für ein Setzwerkzeug auf, das als durchgängige Öffnung 31 im Bodenabschnitt 23 ausgebildet ist. Der maximale Durchmesser E1 der durchgängigen Öffnung 31 entspricht etwa 70% des Kerndurchmessers D1 des Grundkörpers 22. Weiter weist der Grundkörper 22 eine zum zweiten Ende 25 offene Aufnahme 29 auf, die mit einem Innengewinde als Lastangriffsmittel 30 versehen ist und sich in Richtung des zweiten Endes 25 an das Angriffsmittel 28 anschliesst.

Zum Setzen des Befestigungselementes 21 wird zuvor ein Bohrloch 12 in dem harten Untergrund 11 - hier z. B. in ein Betonbauteil - erstellt und das Befestigungselement 21 in dieses eingeführt. Mit einem geeigneten, hier nicht dargestellten Setzwerkzeug, das über das Angriffsmittel 28 ein Drehmoment auf das Befestigungselement 21 überträgt, wird das Befestigungselement 21 in das Bohrloch 12 eingedreht, wobei das selbstschneidende Gewinde 27 ein komplementäres Gewinde in der Bohrlochwandung 13 zur Erzeugung eines Hinterschnitts erstellt. Durch die durchgängige Öffnung 31 ist der Zugang zum Raum 14 vor dem Befestigungselement 21 ermöglicht, welcher beispielsweise mit Mörtel verfüllt werden kann.

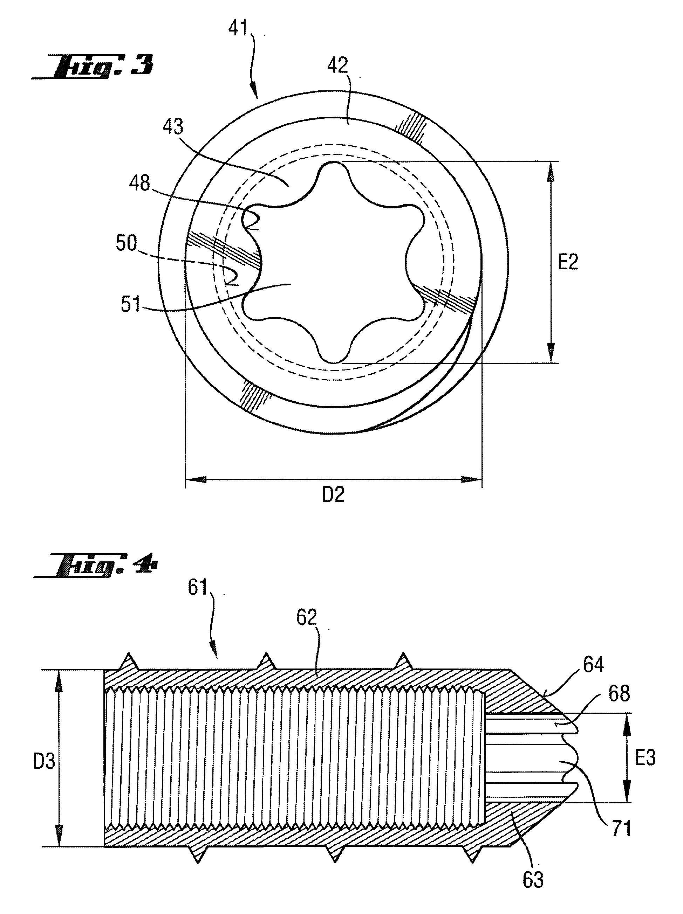

Das in den Figuren 2 und 3 dargestellte zweite Ausführungsbeispiel des Befestigungselementes 41 für harte Untergründe weist zusätzlich zu den beschriebenen Elementen des, in der Figur 1 gezeigten Ausführungsbeispiels des Befestigungselementes 21 zwischen dem als Lastangriffsmittel 50 dienenden Innengewinde und dem Bodenabschnitt 43 einen kalottenförmigen Übergangsbereich 52 zur Führung des Setzwerkzeugs innerhalb des Befestigungselementes 41 auf. Die für das Setzwerkzeug zur Verfügung stehende Kontaktfläche des Angriffsmittels 48 ist gegenüber der für das Setzwerkzeug zur Verfügung stehende Kontaktfläche des Angriffsmittels 28 gemäss dem in Figur 1 gezeigten Beispiel wesentlich vergrössert. Alternativ kann der Übergangsbereich 52 beispielsweise auch konisch ausgebildet sein.

Wie insbesondere aus der Figur 3 ersichtlich, ist das als durchgängige Öffnung 51 ausgebildete Angriffsmittel 48 für das Setzwerkzeug im Bodenabschnitt 43 für den Eingriff mit einem torx-ähnlichen Setzwerkzeug ausgebildet. Der maximale Durchmesser E2 der durchgängigen Öffnung 51 entspricht etwa 80% des Kerndurchmessers D2 des Grundkörpers 42.

Das in der Figur 4 dargestellte dritte Ausführungsbeispiel des Befestigungselementes 61 für harte Untergründe weist einen Grundkörper 62 mit einem ersten Ende 64 auf, das kegelförmig ausgestaltet ist. Das Angriffsmittel 68 ist als durchgängige Öffnung 71 im Bodenabschnitt 63 ausgebildet. Die für das Setzwerkzeug zur Verfügung stehende Kontaktfläche des Angriffsmittels 68 ist gegenüber der für das Setzwerkzeug zur Verfügung stehende Kontaktfläche des Angriffsmittels 28 gemäss dem in Figur 1 gezeigten Beispiel wesentlich vergrössert. Die kegelförmige Ausgestaltung des ersten Endes 64 erleichtert zudem das Einführen des Befestigungselementes 61 in ein Bohrloch und unterstützt die Zentrierung des Befestigungselementes 61 beim Eindrehen desselben in das Bohrloch. Der maximale Durchmesser E3 der durchgängigen Öffnung 71 entspricht etwa 50% des Kerndurchmessers D3 des Grundkörpers 62.

## Patentansprüche

1. Befestigungselement für harte Untergründe (11), wie Beton, Mauerwerk und dergleichen, mit einem zylinderförmigen Grundkörper (22; 42; 62), an dessen Aussenseite (26) zumindest bereichsweise ein selbstschneidendes Gewinde (27) vorgesehen ist und der ein erstes Ende (24; 64) mit einem Bodenabschnitt (23; 43; 63) sowie ein zweites, dem ersten Ende (24; 64) abgewandtes Ende (25) aufweist, wobei der Grundkörper (22; 42; 62) ein innenliegendes Angriffsmittel (28; 48; 68) für ein Setzwerkzeug und eine zum zweiten Ende (25) offene Aufnahme (29) aufweist, die mit einem Lastangriffsmittel (30; 50) versehen ist, wobei sich die Aufnahme (29) in Richtung des zweiten Endes (25) an das Angriffsmittel (28; 48; 68) anschliesst, **dadurch gekennzeichnet, dass** das Angriffsmittel (28; 48; 68) als durchgängige Öffnung (31; 51; 71) im Bodenabschnitt (23; 43; 63) ausgebildet ist, und dass zwischen dem Lastangriffsmittel (50) und dem Bodenabschnitt (43) ein Übergangsbereich (52) zur Führung eines Setzwerkzeugs vorgesehen ist.

2. Befestigungselement nach Anspruch 1, **dadurch gekennzeichnet, dass** der maximale Durchmesser (E1; E2; E3) der durchgängigen Öffnung (31; 51; 71) 50% bis 80% des Kerndurchmessers (D1; D2; D3) des Grundkörpers (22; 42; 62) entspricht.

3. Befestigungselement nach einem der Ansprüche 1 oder 2, **dadurch gekennzeichnet, dass** das erste Ende (64) des Grundkörpers (62) eine kegelförmige Ausgestaltung aufweist.

## Claims

1. A fastener for hard substrates (11), such as concrete, masonry and the like, comprising a basic cylindrical body (22; 42; 62), on the outside (26) of which, at least in some areas, a self-cutting thread (27) is provided and which has a first end (24; 64) comprising a bottom portion (23; 43; 63), and a second end (25) remote from the first end (24; 64), the basic body (22; 42; 62) having means (28; 48; 68) on the inside for the engagement of a setting tool and a receptacle (29) which is open towards the second end (25) and is provided with load-distributing means (30; 50), said receptacle (29) extending towards the second end (25) from the means (28; 48; 68) for engagement of the setting tool, **characterized in that** said means (28; 48; 68) for engagement of the setting tool is formed as a through opening (31; 51; 71) in the bottom portion (23; 43; 63), and **in that**, provided between the load-distributing means (50) and the bottom portion (43), there is a transitional portion (52) for guiding a setting tool.

2. A fastener according to Claim 1, **characterized in that** the maximum diameter (E1; E2; E3) of the through opening (31; 51; 71) corresponds to 50% to 80% of the core diameter (D1; D2; D3) of the basic body (22; 42; 62).

3. A fastener according to one of Claims 1 or 2, **characterized in that** the first end (64) of the basic body (62) is conical in shape.

## Revendications

1. Elément de fixation pour des surfaces sous-jacentes dures (11), telles que du béton, de la maçonnerie et analogue, comportant un corps de base cylindrique (22 ; 42 ; 62) sur le côté extérieur duquel est prévu un filetage autotaraudeur (27) au moins dans certaines zones, lequel corps cylindrique comporte une première extrémité (24 ; 64) avec une partie de fond (23 ; 43 ; 63) et une seconde extrémité (25) opposée à la première extrémité (24 ; 64), dans lequel le corps de base (22 ; 42 ; 62) comporte des moyens de prise situés vers l'intérieur (28 ; 48 ; 68) pour un outil de pose et un logement (29) ouvert vers la seconde extrémité (25) qui est muni de moyens d'application de charge (30 ; 50), dans lequel le logement (29) est adjacent aux moyens de prise (28 ; 48 ; 68) dans une direction de la seconde extrémité (25), **caractérisé en ce que** les moyens de prise (28 ; 48 ; 68) sont configurés sous la forme d'une ouverture traversante (31 ; 51 ;71) dans la partie de fond (23 ; 43 ; 63), et **en ce qu'**une zone de transition (52) est prévue entre les moyens d'application de charge (50) et la zone de fond (43) pour le guidage d'un outil de pose.

2. Elément de fixation selon la revendication 1, **caractérisé en ce que** le diamètre maximal (E1 ; E2, E3) de l'ouverture traversante (31 ; 51 ;71) correspond à 50 % à 80 % du diamètre principal (Dl ; D2 ; D3) du corps de base (22 ; 42 ; 62).

3. Elément de fixation selon l'une quelconque des revendications 1 ou 2, **caractérisé en ce que** la première extrémité (64) du corps de base (62) a un profil conique.
